Europäisches Patentamt

European Patent Office

Office européen des brevets

(11) Veröffentlichungsnummer: **0 159 049 B1**

(12) **EUROPÄISCHE PATENTSCHRIFT**

(45) Veröffentlichungstag der Patentschrift: **02.01.92**

(21) Anmeldenummer: **85105230.8**

(22) Anmeldetag: **14.09.82**

(51) Int. Cl.⁵: **A01F 15/14**

(60) Veröffentlichungsnummer der früheren Anmeldung nach Art. 76 EPÜ: **0 075 252**

(54) **Bindeeinrichtung von Maschinen zum Herstellen von zylindrischen Ballen.**

(30) Priorität: **17.09.81 US 303274**

(43) Veröffentlichungstag der Anmeldung:
**23.10.85 Patentblatt 85/43**

(45) Bekanntmachung des Hinweises auf die
Patenterteilung:
**02.01.92 Patentblatt 92/01**

(84) Benannte Vertragsstaaten:
**BE DE FR GB IT LU NL**

(56) Entgegenhaltungen:
**GB-A- 2 053 079**
**US-A- 3 913 473**
**US-A- 4 062 279**

(73) Patentinhaber: **DEERE & COMPANY**
**1 John Deere Road**
**Moline, Illinois 61265(US)**

(72) Erfinder: **Meiers, Gerald Franklyn**
**1014 Chester**
**Ottumwa Iowa 52501(US)**

(74) Vertreter: **Fricke, Joachim, Dr. et al**
**Dr. R. Döring, Dr. J. Fricke, Patentanwälte**
**Josephspitalstrasse 7**
**W-8000 München 2(DE)**

**Beschreibung**

Die Erfindung betrifft eine Bindeeinrichtung in Maschinen zum Herstellen von zylindrischen Ballen aus Erntegut in einer Wickelkammer mit den Merkmalen des Oberbegriffs des Anspruchs 1.

Bindeeinrichtungen sind in vielerlei Ausführungsformen bereits bekannt. Solche Bindeeinrichtungenweisen einen vor der Wickelkammer zwischen zwei Endstellungen hin und her schwenkbaren Schnurzuführungsarm auf, der während des Wickeln des Ballens in einer Endstellung im Bereich der Maschinenseite in Ruhestellung gehalten wird. Sobald ein Ballen fertiggewickelt ist, wird der Antrieb für den Schnurzuführungsarm ausgelöst, so daß dieser vor der Wickelkammer eine Schwenkbewegung ausführt und dabei das freie Ende der Wickelschnur in den Einzugsbereich der Wickelkammer bringt, in der das Schnurende erfaßt und um den weiterrotierenden zylindrischen Ballen gelegt wird. Die Schwenkbewegung des Armes sorgt dabei dafür, daß die Windungen über die axiale Länge des Ballens in vorbestimmter Weise verteilt werden. Am Ende des Bindevorganges schwenkt der Schnurzuführungsarm wieder in seine Ausgangs- und Ruhestellung und löst bei Annäherung an diese Stellung die Schnurtrenn- und Halteeinrichtung aus, so daß die Bindeschnur durch das Zusammenwirken des Messers mit dem gestellfesten Schneidwiderlager durchtrennt wird. Das Schnurende wird auf dem Widerlager durch das Messer festgeklemmt, damit es für den nächsten Wickelvorgang wieder bereit ist.

Eine Bindeeinrichtung mit den Merkmalen des Oberbegriffs ist aus der US-PS 40 62 279 bekannt. Bei dieser bekannten Einrichtung weist die Schnurtrenn- und Halteeinrichtung einen um eine gestellfeste Achse schwenkbaren Steuerteil auf, der eine Aufnahme für das Eintreten des Schnurzuführungsarmes bei Annäherung an die Ruhestellung aufweist und durch den Schnurzuführungsarm am Ende von dessen Schwenkbewegung mitgenommen und verschwenkt wird. Der Steuerteil ist starr mit einem Steuerarm verbunden, der über einen Bolzen an einer Betätigungsstange angreift, um diese in Längsrichtung zu verschieben, wobei die Betätigungsstange über einen Kurbelarm das schwenkbar gelagerte Messer verschwenken kann. Der Bolzen des Steuerarmes drückt in der einen Längsrichtung der Betätigungsstange direkt auf eine Schulter dieser Stange, um das Messer von dem Schneidwiderlager abzuheben. In der anderen Richtung wirkt der Bolzen auf eine auf die Betätigungsstange aufgefädelte Feder und bildet für diese Feder ein Widerlager, so daß die Feder die Betätigungsstange in Richtung auf die Schnurtrenn- und Schnurhaltestellung des Messers elastisch vorspannen kann. Um die beiden Endstellungen des Steuerteils genau festlegen zu können, weist dieser zwei Rastausnehmungen auf, in die in den beiden Endstellungen der Schwenkbewegung des Steuerteils ein Rastbolzen unter elastischer Vorspannung einfällt.

Bei dieser bekannten Bindeeinrichtung sind eine relativ genaue Herstellung und genaue Einjustierung der verschiedenen beweglichen Teile erforderlich, damit die durch die Raststellungen bestimmten Funktionen in der gewünschten Weise erhalten werden. In der Schnurtrennstellung weist die Schneide des Messers mit der Schneide des Widerlagers in einer relativen Stellung von etwa 90° einen Schneidkantenkontakt auf, so daß für die Beibehaltung einer guten Trennwirkung bei Abnutzung das Messer nachgestellt oder ausgewechselt werden muß. Auch ist eine besondere Führungs- und Leiteinrichtung erforderlich, um beim Zurückschwenken des Schnurzuführungsarmes die Schnur ordnungsgemäß über das Widerlager zu führen, damit ein Trennschnitt ausgeführt werden kann.

Demgegenüber liegt der Erfindung die Aufgabe zugrunde, die Bindeeinrichtung mit den Merkmalen des Oberbegriffs des Anspruchs 1 so weiterzubilden, daß sie wesentlich einfacher in ihrer Steuerfunktion und in ihrem Aufbau ist und eine höhere Einsatzdauer ihrer funktionswichtigen beweglichen Teile ohne die Notwendigkeit der Nachstellung oder Auswechslung und ohne hohe Anforderungen an die Genauigkeit der Herstellung oder Einjustierung aufweist.

Diese Aufgabe wird durch die Lehre des Anspruchs 1 gelöst.

Hierbei wird die Trennwirkung nicht durch eine bestimmte Stellung von Kanten des Messers und des Schneidwiderlagers bestimmt. Vielmehr wirkt das Messer mit einer größeren Widerlagerfläche zusammen, so daß auch bei Abnutzung des Messers stets eine für das Trennen zweckmäßige Stellung des Messers gegenüber dem Widerlager erreicht wird. Es bedarf daher auch keiner Nachjustierung der Anordnung bei Abnutzung des Messers. Dadurch wird die Anordnung wesentlich einfacher und zeigt eine vergleichsweise große Lebensdauer ohne besondere Wartung. Die flächige Ausbildung des Schneidwiderlagers ermöglicht es die Widerlagerfläche so anzuordnen, daß ohne Leiteinrichtungen eine sichere Auflage der Schnur auf das Widerlager bei der Rückbewegung des Schnurzuführungsarmes gewahrleistet ist. Auch dies führt zu einer Vereinfachung der Anordnung und zu einer sicheren Steuerung.

Ein besonders vorteilhaftes Zusammenwirken der beiden Vorspanneinrichtungen wird erreicht, wenn die Erfindung nach der Lehre des Anspruchs 2 weitergebildet wird.

Die Weiterbildung nach der Lehre des Anspruchs 3 führt zu einem besonders einfachen Aufbau der Anordnung. Entsprechendes gilt für die Lehre nach Anspruch 4.

Durch die teleskopartige Ausbildung und Anordnung von Steuerteil und Betätigungsteil nach Anspruch 5 erhält man eine kompakte und besonders einfache Anordnung, in der die beiden Vorspanneinrichtungen leicht und in raumsparender Weise angeordnet werden können. Die Vorspannung des Steuerteils gegenüber einem gestellfesten Punkt sorgt dafür, daß die abgehobene Stellung des Messers während des Bindevorganges zuverlässig eingehalten wird, ohne daß es dazu einer besonderen, die Stellung des Steuerteils bestimmenden Rasteinrichtung bedarf. Schon dadurch wird die Anordnung sehr einfach sowohl in der Herstellung als auch in der Montage und der Wartung. Ebenso braucht auch die Ruhestellung des Schnurzuführungsarmes bzw. des Steuerteils in dieser Ruhestellung nicht durch eine Rastvorrichtung festgelegt werden, da es auf die genaue Einhaltung einer vorbestimmten Stellung auch in diesem Fall nicht ankommt. Es genügt, den Schnurzuführungsarm über seinen Antrieb in seiner Ruhestellung festzuhalten, auch wenn dadurch diese Ruhestellung nur innerhalb eines relativ großen Toleranzbereiches festgelegt werden kann.

Die Erfindung wird nachfolgend anhand schematischer Zeichnungen an einem Ausführungsbeispiel näher erläutert.

Es zeigen:

Figur 1 eine Seitenansicht von rechts einer Maschine großer Abmessungen zum Herstellen von zylindrischen Ballen aus Erntegut in einer Wickelkammer.

Figur 2 einen Querschnitt durch die Wickelkammer im Bereich des Ernteguteinlasses der Maschine nach Fig. 1, wobei die Bindeeinrichtung in einer die Schnur in die Wickelkammer einführenden Stellung gezeigt ist.

Figur 3 in perspektivischer Darstellung die Schnurtrenneinrichtung gemäß der Erfindung, die bei der Maschine und der Bindeeinrichtung nach Figur 1 und 2 verwendet ist und

Figur 4 im Ausschnitt Und Seitenansicht das Messer der Schnurtrenneinrichtung nach Figur 3.

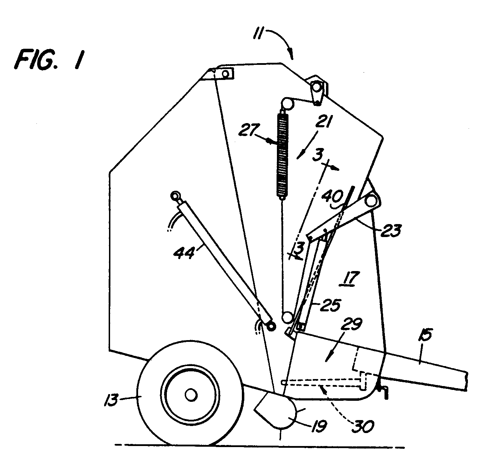

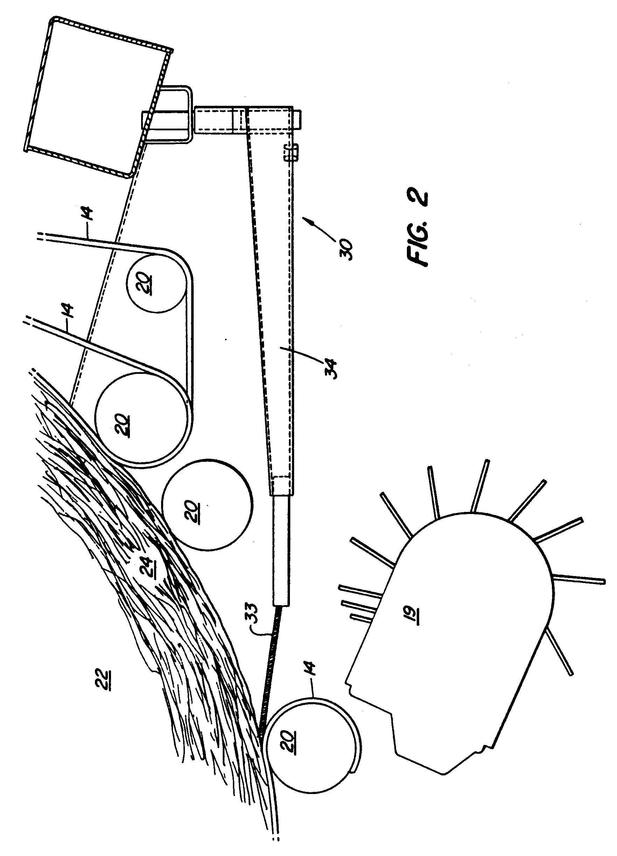

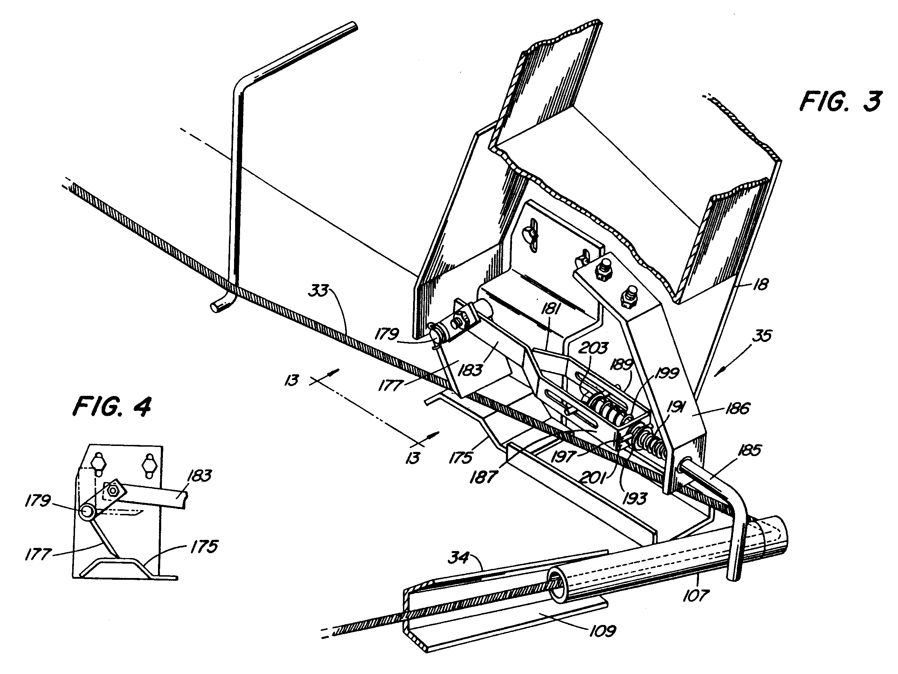

In den Figuren 1 und 2 ist eine Maschine zum Herstellen von zylindrischen Ballen mit einer automatisch arbeitenden Bindeeinrichtung 12 gezeigt. Die Maschine umfaßt Laufräder 13 und eine Anhängevorrichtung 15 zum Anhängen an einen Ackerschlepper Die Wickelkammer 22 wird zwischen zwei aufrechten Seitenwänden 17 und 18 und mehrere Riemen begrenzt, die über Querrollen 20 laufen. Das Erntegut wird vom Boden durch eine Aufnahmeeinrichtung 19 üblicher Art aufgenommen und durch einen Eintritt in die Wickelkammer 22 geleitet, wo das Gut zwischen den Riemen oder Bändern zu einem zylindrischen Ballen verdichtet und aufgewickelt wird, dessen Dichte durch eine Spanneinrichtung 21 gesteuert wird. Diese umfaßt Steuerarme 23 mit hydraulischen Zylindern 25 und Federeinrichtungen 27. Bei der Zunahme des Ballens 24 schwenken die Arme 23 im Gegenuhrzeigersinne gegen die Spannung der Vorspanneinrichtung. Wenn der Ballen den gewünschten Durchmesser erreicht hat wird ein Umschnürungszyklus oder Bindezyklus eingeleitet. Die Bindeeinrichtung 12 umfaßt eine Einrichtung zur Abgabe einer Schnur 33 in die Kammer, eine hydraulische Antriebseinrichtung, um einen Schnurführungsarm 34 von der Wickelkammer hin und her zu bewegen sowie eine Steuereinrichtung, die die Zunahme des Durchmessers des Ballens 24 überwacht und automatisch bei Erreichen eines vorbestimmten Durchmessers einen Pumpenantrieb für eine hydraulische Pumpe und zur Verstellung eines hydraulischen Ventils zu betätigen bzw. zu verstellen. Nach Umwickeln des Ballens mit der Schnur 33 wird diese automatisch durch eine Schnurtrenneinrichtung 35 durchtrennt, die näher in den Figuren 3 und 4 dargestellt ist. Nach dem Durchtrennen der Schnur 33 betätigt der Fahrer einen Auswurfmechanismus mit hydraulischen Zylindern 44, um die Wickelkammer zu öffnen und den fertigen Ballen auf den Erdboden auszuwerfen.

Die in den Figuren 3 und 4 gezeigte Schnurtrenneinrichtung 35 umfaßt ein gestellfestes Schneidwiderlager 175, ein kurbelarmförmiges Messer 177, das um eine Welle 179 schwenkbar ist und zwischen einer an der Widerlagerfläche des Schneidwiderlagers angreifenden Stellung und einer von dieser entfernten Stellung bewegbar ist, sowie einem Betätigungsteil 181, um das Messer 177 zwischen seinen Stellungen zu bewegen, und zwar in Abhängigkeit von der Bewegung des Schnurführungsarmes 34. Der Letztere umfaßt eine rinnenförmige Führung 109 und an seinem freien Ende ein Führungsrohr 107 von kurzer Länge, durch das die Schnur 33 gefädelt ist. Der Betätigungsteil 181 weist einen vorderen, am Messer angreifenden Abschnitt 183 und einen rückwärtigen gegabelten Abschnitt mit parallelen Schenkeln 187,189 auf, der mit einem stangenförmigen Steuerteil 185 in einem teleskopartigen Eingriff steht und in beiden Längsrichtungen elastisch nachgiebig gekuppelt ist. Das rückwärtige Ende des Steuerteils 185 ist zum Angreifen des Schnurzuführungsarmes 34 abgewinkelt. Ferner ist der Steuerteil in einer gestellfesten Halterung 186 längsbeweglich geführt. Die Halterung 186 dient zugleich zur Abstützung einer den Steuerteil 185 in Figur 4 nach links vorspannenden Feder 191. Das vordere Ende des Steuerteils 185 ist mit einem Querstift 203 in Schlitzen an den Gabelschenkeln 187, 189 des Betätigungsteils 181 geführt.

Eine Vorspanneinrichtung in Form einer Schraubenfeder 199 stützt sich einerseits an dem Stift 203 und andererseits an dem Gabelende 201 des Betätigungsteils 181 ab und spannt den Betätigungsteil 181 in einer Richtung vor, so daß das Messer 177 seine Trenn- und Haltestellung auf der Widerlagerfläche des Schneidwiderlagers einnimmt, die in Figur 4 ausgezogen dargestellt ist. Die Feder 199 ist wie die Feder 191 auf dem Steuerteil 185 aufgefädelt. Das vordere Ende der Feder 191 stützt sich an einem Stift 197 am Steuerteil 185 und an einer Unterlegscheibe 193 ab und wirkt so über den Stift 197 auf das Gabelende 201 des Betätigungsteils 181 in einer Richtung auf die Abhebestellung (gestrichelt in Fig. 4) des Messers 177. Die Feder 191 ist schwächer als die Feder 199. Das bedeutet, daß der Steuerteil 185 und der Betätigungsteil 181 als Einheit gegenüber dem Halter 186 von einer voll zurückgezogenen Stellung des Steuerteils (dies entspricht dem Zustand, bevor der Schnurführungsarm 34 an dem Steuerteil 185 angreift) in eine zweite ausgefahrene Stellung bewegbar sind, und zwar gegen die Vorspannung der Feder 191. Diese Bewegung von der ersten Stellung in die zweite Stellung erfolgt unter der Eingriffswirkung des Schnurführungsarmes 34 an dem Steuerteil 185. In dieser zweiten Stellung greift das Messer 177 an der Widerlagerfläche des Schneidwiderlagers 175 an, wie dies ausgezogen in Figur 4 dargestellt ist. Der Schnurzuführungsarm 34 kann jedoch nach Erreichen dieser Stellung seine Bewegung fortsetzen und dabei den Steuerteil 185 mitnehmen. Während dieser weiteren Bewegung des Steuerteils 185 bleibt der Betätigungsteil 181 stationär. Dabei wird die Feder 199 zusammengedrückt. Diese Überfahrbewegung des Schnurzuführungsarmes 34 zusammen mit dem Steuerteil 185 stellt sicher, daß eine Einstellung zur Kompensation der Abnutzung z.B. des Messers für längere Zeitperioden nicht erforderlich ist. Auch wenn die Messerschneide stumpf wird oder sich andere Komponenten abnutzen oder lockern, wird das Messer 177 zuverlässig an der Widerlagerfläche des Schneidwiderlagers 175 angreifen. Auch ist bei dieser Anordnung die Notwendigkeit einer anfänglichen genauen Justierung oder der Einhaltung enger Herstellungstoleranzen entscheidend geringer als im Vergleich zu den bekannten Schnurtrenneinrichtungen. Es ist nicht länger notwendig, das Ende der Bewegung des Schnurzuführungsarmes sorgfältig zu steuern oder durch Rasten festzulegen, um exakt das Ende der Bewegung bei Auftreffen des Messers auf das Schneidwiderlager zu beenden.

Bei Betrieb befindet sich das Messer zwischen zwei Schneidzyklen unter der Wirkung der Feder 191 in der um wesentlichen horizontalen Stellung, die strichpunktiert in Figur 4 dargestellt ist. Die Anordnung ist so getroffen, daß in der Feder 199 eine gewisse Restzusammendrückung aufrechterhalten bleibt. Das gleiche gilt für die Feder 191, in der ebenfalls in der unwirksamen Stellung eine Restvorspannung aufrechterhalten wird, um die Elemente der Schnurtrenneinrichtung unter Vorspannung zu halten. Wenn der Schnurführungsarm von seiner zweiten Stellung nahe der Seitenwand 17 in die erste Stellung nahe der Seitenwand 18 zurückbewegt wird, greift der Schnurzuführungsarm 34 an dem Steuerteil 185 an, um diesen anfänglich von der ersten zurückgezogenen Stellung in die zweite ausgefahrene Stellung gegen die Vorspannung der Feder 191 zu bewegen, bis das Messer 177 auf das Schneidwiderlager 175 trifft. Dabei bewegen sich Betätigungsteil 181 und Steuerteil 185 als Einheit. Die Länge des Hubes von der ersten in die zweite Stellung kann beispielsweise 4 cm betragen. Der Schnurzuführungsarm 34 setzt danach seine Bahn fort und nimmt den Steuerteil 185 aus der zweiten Stellung weiter mit. Dabei wird die Feder 199 zusammengedrückt und gestattet es dem Steuerteil 185 sich relativ gegenüber dem nun festgehaltenen Betätigungsteil 181 zu bewegen. Die Hublänge dieser weiteren Bewegung kann beispielsweise etwa 0,6 cm betragen. Die Schnur 33 wird beim ersten Angreifen des Messers an der Fläche des Schneidwiderlagers durchtrennt, also im Bereich der zweiten Stellung des Steuerteils 185. Die Schnurtrenneinrichtung wird in dieser Stellung gehalten, bis ein neuer Bindevorgang ausgelöst wird, nach dem der Ballen fertiggewickelt ist. Dadurch wird die Steuereinrichtung betätigt, um den hydraulischen Antrieb zum Bewegen des Schnurführungsarmes 34 aus seiner ersten Stellung nahe der Seitenwand 18 in die zweite Stellung nahe der Steienwand 17 zu bewegen. Die Gegenuhrzeigerbewegung des Schnurführungsarmes 34 ermöglicht es den Federn 191 und 199 den Betätigungsteil 181 und den und den Steuerteil 185 in die zurückgezogene Stellung zurückzubewegen, in der das Messer eine Abstandsstellung vom Schneidwiderlager einnimmt. Die Schnurtrenneinrichtung wird in dieser unwirksamen Stellung gehalten, bis der Schnurzuführungsarm 34 in seine ursprüngliche Stellung nahe der Seitenwand 18 unter Wirkung des hydraulischen Antriebes zurückkehrt und dabei die Schnur 73 über die Widerlagerfläche des Schneidwiderlagers legt.

**Patentansprüche**

1. Bindeeinrichtung (12) in Maschinen (11) zum Herstellen von zylindrischen Ballen (24) aus Erntegut in einer Wickelkammer (22), mit einem vor dieser zwischen zwei Endstellungen hin- und herschwenkbaren Schnurzuführungsarm (34) zum Zuführen einer Bindeschnur (33) zu der Wickelkammer (22) und mit einer Schnurtrenn- und Halteeinrichtung (35), die ein gestellfestes Schneidwiderlager (175) und ein gegenüber diesem um eine gestellfeste Achse (179) schwenkbares Messer (177) zum Durchtrennen der Schnur und Festklemmen des einen Schnurendes aufweist, welches Messer über einen Kurbelarm mit einer Betätigungseinrichtung (181) antriebsmäßig verbunden ist, die mit einem Steuerarm (185) in Richtung einer Betätigung des Messers (177) über eine ausziehbare Führungseinrichtung (183) mit Vorspanneinrichtung (199) elastisch nachgiebig gekuppelt ist, wobei der Steuerarm (185) durch direktes Angreifen des Schnurzuführungsarmes (34) zwischen einer Stellung, in der das Messer (177) vom Schneidwiderlager (175) abgehoben ist, und einer Stellung bewegbar ist, in der das Messer (177) unter der Wirkung der durch den Steuerarm (185) gespannten Vorspanneinrichtung (199) an dem Schneidwiderlager (175) angreift, dadurch **gekennzeichnet,** daß das Schneidwiderlager (175) eine mit dem Messer (197) zusammenwirkende, in Richtung der Bewegung des die Bindeschnur (33) abgebenden Endes (107) des Schnurzuführungsarmes (34) ausgedehnte Widerlagerfläche aufweist, und mit dieser so angeordnet ist, daß sich das die Bindeschnur abgebende Ende (107) des Schnurzuführungsarmes (34) direkt oberhalb der Widerlagerfläche bewegt.

2. Bindeeinrichtung nach Anspruch 1, dadurch **gekennzeichnet,** daß die Betätigungseinrichtung (181) und der Steuerarm (185) gleichachsig angeordnete und teleskopartig ineinandergreifende und in Längsrichtung zueinander bewegliche Teile sind und der Steuerarm (185) gegenüber einem gestellfesten Widerlager (186) durch eine weitere Vorspanneinrichtung (191) in Richtung der abgehobenen Stellung des Messers (177) elastisch nachgiebig vorgespannt ist.

3. Bindeeinrichtung nach Anspruch 2, dadurch **gekennzeichnet,** daß die zwischen gestellfestem Widerlager (186) und Steuerarm (185) wirksame Vorspanneinrichtung (191) schwächer als die zwischen dem Steuerarm (185) und der Betätigungseinrichtung (181) wirksame Vorspanneinrichtung (199) ausgebildet ist und in der vom Schnurführungsarm (34) unbeaufschlagten Schnurfreigabestellung des Messer (175) beide Vorspanneinrichtungen (191, 199) unter elastischer Vorspannung stehen.

4. Bindeeinrichtung nach Anspruch 3, dadurch **gekennzeichnet,** daß der Steuerarm (185) ein in dem gestellfesten Widerlager (186) sowie über eine Stift-Schlitzverbindung an dem rückwärtigen, gegabelten Abschnitt (187,189) der Betätigungseinrichtung geführter stangenförmiger Teil ist und die Vorspanneinrichtungen auf dem stangenförmigen Teil aufgefädelte Schraubendruckfedern (191,199) sind, wobei die in dem gegabelten Abschnitt (187,189) angeordnete, stärkere Feder (199) ständig bestrebt ist, den Steuerarm (185) zusammen mit der Betätigungseinrichtung (181) in einer vorbestimmten relativen Stellung zu halten.

5. Bindeeinrichtung nach Anspruch 4, dadurch **gekennzeichnet,** daß der stangenförmige Steuerarm (185) an seinem freien Ende einen abgewinkelten Mitnehmeranschlag für den Schnurzuführungsarm (34) aufweist.

**Claims**

1. Tying device (12) in machines (11) for producing cylindrical bales (24) from crop material in a winding chamber (22), with a cord supply arm (34) which can be pivoted to and fro between two end positions in front of the winding chamber (22) to supply a tie cord (33) to the winding chamber (22) and with a cord cutting and holding device (35) which comprises a cutting support (175) fixed to the frame and a blade (177) pivotable relative to the cutting support (175) about a shaft (179) fixed to the frame for cutting through the cord and clamping one end of the cord, which blade is connected for driving purposes by a crank arm to an operating device (181) which is coupled to a control arm (185) in elastically yielding relationship in the direction of operation of the blade (177) by means of an extendable guide device (183) with pretensioning device (199), wherein the control arm (185) is movable by direct engagement of the cord supply arm (34) between a position in which the blade (177) is lifted off the cutting support (175) and a position in which the blade (177) engages the cutting support (175) under the influence of the pretensioning device (199) tensioned by the control arm (185), characterised in that the cutting support (175) comprises a support surface cooperating with the blade (197) and extending in the direction of movement of the end (107) of the cord supply arm (34) which dispenses the tie cord (33), and is arranged with this support surface in such a way that the end (107) of the cord supply arm (34) dispensing the tie cord moves directly above the support surface.

2. Tying device according to claim 1, characterised in that the operating device (181) and the control arm (185) are coaxially arranged, telescoping parts moving in the longitudinal direction relative to each other, and the control arm (185) is biassed in elastically yielding relationship relative to a support (186) fixed to the frame by an additional pretensioning device (191) in the direction of the raised position of the blade (177).

3. Tying device according to claim 2, characterised in that the pretensioning device (191) operative between the support (186) fixed to the frame and the control arm (185) is weaker than the pretensioning device (199) operative between the control arm (185) and the operating device (181), and in the cord release position of the blade (175) not under load from the cord supply arm (34), both pretensioning devices (191, 199) are under elastic pretension.

4. Tying device according to claim 3, characterised in that the control arm (185) is a rod-shaped member guided in the support (186) fixed to the frame as well as on the forked rear section (187, 189) of the opeating device by means of a pin and slot connection, and the pretensioning devices are helical compression springs (191, 199) mounted on the rod-shaped member, wherein the stronger spring (199) arranged in the forked section (187, 189) constantly tends to hold the control arm (185) together with the operating device (181) in a predetermined relative position.

5. Tying device according to claim 4, characterised in that the rod-shaped control arm (185) comprises at its free end an angled driver stop for the cord supply arm (34).

**Revendications**

1. Dispositif de liage (12) installé dans des machines (11) servant à former des balles cylindriques (24) d'une récolte dans une chambre d'enroulement (22), comportant un bras guide-ficelle (34), qui peut pivoter en va-et-vient entre deux positions d'extrémité et qui sert à amener une ficelle de liage (33) à la chambre d'enroulement (22), et un dispositif (35) de sectionnement et de retenue de la ficelle, qui comporte une butée de coupe (175) fixée au châssis et un couteau (177) qui peut pivoter autour d'un axe (179) fixé au châssis et sert à sectionner la ficelle et à maintenir bloquée une extrémité de la ficelle, ce couteau étant raccordé selon une liaison motrice par l'intermédiaire d'un bras de manivelle à un dispositif d'actionnement (181) qui est accouplé d'une manière apte à fléchir élastiquement à un bras de commande (185) dans le sens d'un actionnement du couteau (177), par l'intermédiaire d'un dispositif de guidage (183) pouvant être déployé et comportant un dispositif de précontrainte (199), le bras de commande (185) pouvant être déplacé au moyen d'une activation directe du bras guide-ficelle (34), entre une position, dans laquelle le couteau (177) est écarté de la butée de coupe (164), et une position, dans laquelle le couteau (177) s'applique contre la butée de coupe (175) sous l'action du dispositif de précontrainte (199) tendu par le bras de commande (185), caractérisé par le fait que la butée de coupe (175) comporte une surface de butée, qui coopère avec le couteau (197) et est étendue dans la direction du déplacement de l'extrémité (107), qui délivre la ficelle de liage (33), du bras guide-ficelle (34), et cette surface de butée est disposée de telle sorte que l'extrémité (107), qui délivre la ficelle de liage, du bras guide-ficelle (34) se déplace directement au-dessus de la surface de butée.

2. Dispositif de liage selon la revendication 1, caractérisé en ce que le dispositif d'actionnement (181) et le bras de commande (185) sont des éléments dont les axes coïncident qui s'engagent l'un dans l'autre de façon télescopique et sont déplaçables entre eux dans la direction longitudinale, et que le bras de commande (185) est précontraint de manière à fléchir élastiquement par rapport à une butée (186) fixée au châssis, par un autre dispositif de précontrainte (191), en direction de la position écartée du couteau (177).

3. Dispositif de liage selon la revendication 2, caractérisé en ce que le dispositif de précontrainte (191), qui agit entre la butée (186) solidaire du châssis et le bras de commande (185), est agencé de manière à être plus faible que le dispositif de précontrainte (199) agissant entre le bras de commande (185) et le dispositif d'actionnement (181), et lorsque le couteau (175) est dans la position de libération de la ficelle, dans laquelle il n'est pas chargé par le bras guide-ficelle (34), les deux dispositifs de précontrainte (191,199) sont soumis à une précontrainte élastique.

4. Dispositif de liage selon la revendication 3, caractérisé en ce que le bras de commande (185) est un élément en forme de barre, qui est guidé dans la butée (186) solidaire du châssis ainsi que par l'intermédiaire d'une liaison à tige et fente sur la section arrière en forme de fourche (187,189) du dispositif d'actionnement, et que les dispositifs de précontrainte sont des ressorts hélicoïdaux de pression (191,199), emmanché sur la partie en forme de barre, le ressort plus raide (199), qui est disposé dans l'élément en forme de fourche (187,189) s'efforçant en permanence de maintenir le bras de commande (185) ainsi que le dispositif d'actionnement (181) dans des positions relatives prédéterminées.

5. Dispositif de liage selon la revendication 4, caractérisé en ce que le bras de commande en forme de barre (185) comporte, sur son extrémité libre, une butée d'entraînement coudée pour le bras guide-ficelle (34).

FIG. 1

FIG. 2

FIG. 3

FIG. 4

33

13

13

179

177

175

187

183

181

203

189

199

191

186

18

35

185

197

201

193

107

34

109

179

177

175

183

EP 0 159 049 B1